# EUROPEAN PATENT SPECIFICATION

(11) **EP 4 411 940 B1**
(45) Date of publication and mention of the grant of the patent: **26.11.2025**
(21) Application number: 22907829.0
(22) Date of filing: 07.12.2022
(51) Int. Cl.: H01M 10/625, H01M 10/6555, H01M 10/643, H01M 10/613, H01M 50/249

(54) **BATTERY PACK AND VEHICLE COMPRISING THE SAME**
BATTERIEPACK UND FAHRZEUG MIT BATTERIEPACK
BLOC-BATTERIE ET VÉHICULE COMPRENANT UN BLOC-BATTERIE

(30) Priority: 17.12.2021 KR 20210182199
(43) Date of publication of application: 07.08.2024
(73) Proprietor: LG Energy Solution, Ltd., Seoul 07335 (KR)
(72) Inventor: YANG, Jin-Oh, Daejeon 34122 (KR); OH, Kwang-Keun, Daejeon 34122 (KR); JUNG, In-Hyuk, Daejeon 34122 (KR); CHOI, Hae-Won, Daejeon 34122 (KR)
(74) Representative: Plasseraud IP
(86) International application number: PCT/KR2022/019808
(87) International publication number: WO 2023/113360

(56) References cited:
- WO-A1-2021/102340
- CN-A- 105 977 578
- CN-U- 210 984 812
- JP-A- 2012 009 388
- KR-A- 20190 097 231
- US-A1- 2014 212 695
- US-A1- 2021 159 567

## Description

### TECHNICAL FIELD

The present disclosure relates to a battery pack and a vehicle comprising the same, and more particularly, to a battery pack with improved cooling performance and a vehicle comprising the same.

The present application claims the benefit of Korean Patent Application No. 10-2021-0182199 filed on December 17, 2021 with the Korean Intellectual Property Office.

### BACKGROUND ART

Due to their characteristics of being easily applicable to various products and electrical properties such as high energy density, secondary batteries are commonly used not only in portable devices, but also in electric vehicles (EVs) or hybrid electric vehicle (HEVs) that operate by an electrical driving source. For their primary advantage of remarkably reducing the use of fossil fuels and not generating by-products from the use of energy, secondary batteries are gaining attention as a new source of energy for improving eco-friendliness and energy efficiency.

The types of secondary batteries widely used at present include lithium ion batteries, lithium polymer batteries, nickel cadmium batteries, nickel hydrogen batteries, nickel zinc batteries or the like. A unit secondary battery cell or a unit battery cell has an operating voltage of about 2.5V to 4.5V. Accordingly, when a higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack may be variously set depending on the required output voltage or charge/discharge capacity.

Meanwhile, when forming the battery pack by connecting the plurality of battery cells in series/in parallel, it is general to make a battery module including at least one battery cell, and then make a battery pack using at least one battery module with an addition of any other component.

In general, the conventional battery pack includes a plurality of battery cells and a cell frame accommodating the plurality of battery cells. In general, the conventional cell frame includes an assembly of plates including a front plate, a rear plate, a side plate, a lower plate and an upper plate to accommodate the plurality of battery cells and ensure the strength.

However, due to the structural characteristics of the cell frame including the assembly of plates, the conventional battery pack has high manufacturing cost and complex assembly process, and thus there is a manufacturing efficiency disadvantage.

Moreover, the structural characteristics of the cell frame including the assembly of plates make it difficult to properly arrange cooling units, resulting in low cooling performance of the battery pack.

JP2012009388A discloses a battery pack. US2021159567A1 discloses an integrated energy storage system.

### DISCLOSURE

### Technical Problem

The present disclosure is directed to providing a battery pack with improved cooling performance and a vehicle comprising the same.

The present disclosure is further directed to providing a battery pack with high energy density and improved manufacturing efficiency and a vehicle comprising the same.

However, the technical problem to be solved is not limited to the above-described problems, and these and other problems will be clearly understood by those skilled in the art from the following detailed description.

### Technical Solution

To solve the above-described problem, the present disclosure provides a battery pack including a plurality of battery cells; a busbar assembly disposed on one side of the plurality of battery cells and electrically connected to the plurality of battery cells; and a cooling unit disposed between the plurality of battery cells and secured to the busbar assembly.

Additionally, preferably, the cooling unit may be provided in contact with two surfaces of the remaining battery cells except the two outermost battery cells among the plurality of battery cells, in a widthwise direction of the battery pack.

Additionally, the cooling unit includes a cooling tube formed with a predetermined length along a lengthwise direction of the battery pack, and disposed between the plurality of battery cells; a cooling channel provided in the cooling tube and configured to circulate a cooling fluid for cooling the battery cells; and a cooling fluid inlet/outlet connected to the cooling tube such that the cooling fluid inlet/outlet is in communication with the cooling channel, and the busbar assembly is connected and fixed to the cooling tube.

Additionally, the cooling unit includes a fixing holder provided on the cooling tube and connected to the busbar assembly.

Additionally, preferably, the fixing holder may be provided on an upper side of the cooling tube and inserted into the busbar assembly.

Additionally, preferably, the fixing holder may be formed with a predetermined length along a lengthwise direction of the cooling tube, and disposed below the busbar assembly.

Additionally, preferably, the busbar assembly may include a busbar cover to cover an upper side of the plurality of battery cells; and a sub busbar of a single layer inserted into the busbar cover and configured for electrical connection with positive and negative electrodes of the plurality of battery cells, and the busbar cover may be connected and fixed to the cooling tube.

Additionally, preferably, the sub busbar may include a busbar bridge inserted into the busbar cover and formed with a predetermined length along a widthwise direction of the battery pack; a positive connection portion integrally extended and protruded from the busbar bridge; and a negative connection portion integrally extended from the busbar bridge and protruded in an opposite direction to the positive connection portion.

Additionally, preferably, the busbar cover may include a main cover to cover the busbar bridge; and a center cover connected to the main cover, and formed with a predetermined length along the lengthwise direction of the battery pack to support the main cover.

Additionally, preferably, the busbar cover may comprise an insulating material.

Additionally, preferably, the busbar cover may comprise a polyimide film.

Additionally, preferably, the battery pack may comprise a filler member filled in a space between the cooling unit and the plurality of battery cells.

Additionally, preferably, the filler member may comprise a potting resin.

Additionally, preferably, the filler member may comprise a silicone resin.

The present disclosure further provides a vehicle including at least one battery pack according to the above-described embodiments.

### Advantageous Effects

According to the various embodiments as described above, it may be possible to provide a battery pack with improved cooling performance and a vehicle comprising the same.

Additionally, according to the various embodiments as described above, it may be possible to provide a battery pack with high energy density and improved manufacturing efficiency and a vehicle comprising the same.

By many other embodiments of the present disclosure, many other additional effects may be achieved. These many effects of the present disclosure will be described in detail in each embodiment, and regarding the effect that may be easily understood by those skilled in the art, its description is omitted.

### DESCRIPTION OF DRAWINGS

The accompanying drawings illustrate exemplary embodiments of the present disclosure, and together with the detailed description of the present disclosure described below, serve to provide a further understanding of the technical aspect of the present disclosure, and thus the present disclosure should not be construed as being limited to the drawings.
FIG. 1 is a diagram illustrating a battery pack according to an embodiment of the present disclosure.
FIG. 2 is an exploded perspective view of the battery pack of FIG. 1.
FIG. 3 is a diagram illustrating a battery cell of the battery pack of FIG. 2.
FIG. 4 is a partial cross-sectional view showing the internal structure of the battery cell of FIG. 3.
FIG. 5 is a partial cross-sectional view showing the upper part structure of the battery cell of FIG. 3.
FIG. 6 is a partial cross-sectional view showing the lower part structure of the battery cell of FIG. 3.
FIG. 7 is a bottom view of the battery cell of FIG. 3.
FIG. 8 is a diagram illustrating a busbar assembly of the battery pack of FIG. 2.
FIG. 9 is a diagram illustrating a connection busbar unit of the busbar assembly of FIG. 8.
FIG. 10 is an exploded perspective view of the connection busbar unit of FIG. 9.
FIG. 11 is a diagram illustrating a sub busbar of the connection busbar unit of FIG. 10.
FIG. 12 is a diagram illustrating a cooling unit of the battery pack of FIG. 2.
FIG. 13 is a cross-sectional view of the cooling unit of FIG. 12.
FIGS. 14 to 17 are diagrams illustrating fixing holders of the cooling unit of FIG. 12.
FIG. 18 is a diagram illustrating filler member injection of the battery pack of FIG. 1.
FIG. 19 is a diagram illustrating a vehicle according to an embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made thereto at the time that the application was filed.

The terms indicating directions such as upper, lower, left, right, front and rear are used for convenience of description, but it is obvious to those skilled in the art that the terms may change depending on the position of the stated element or an observer.

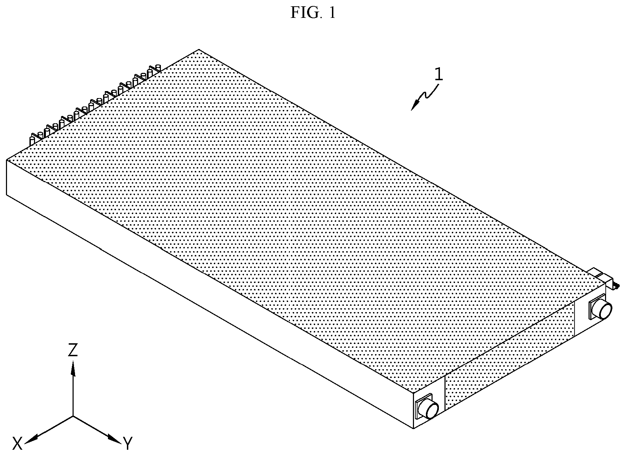

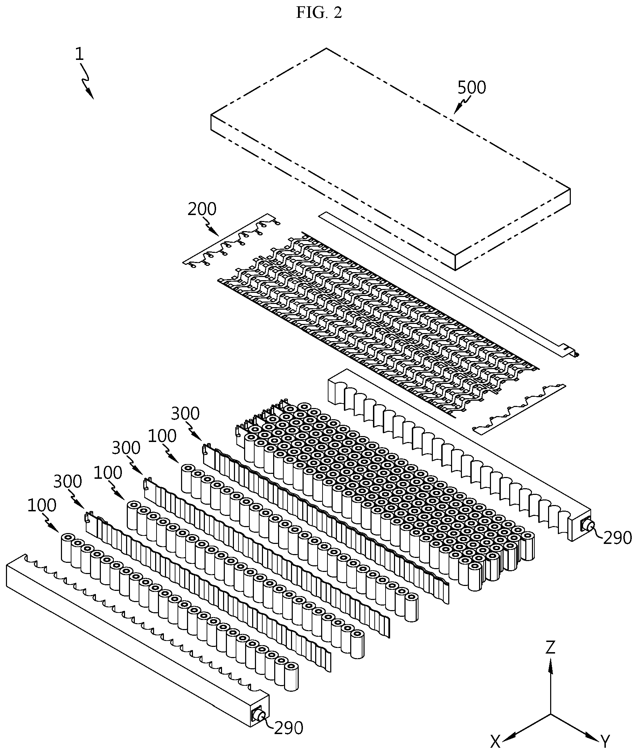

FIG. 1 is a diagram illustrating a battery pack according to an embodiment of the present disclosure, and FIG. 2 is an exploded perspective view of the battery pack of FIG. 1.

Referring to FIGS. 1 and 2, the battery pack 1 may be used as an energy source in an electric vehicle or a hybrid electric vehicle. Hereinafter, the battery pack 1 used in the electric vehicle will be described in more detail in the following related drawings.

The battery pack 1 may include a plurality of battery cells 100, a busbar assembly 200 and a cooling unit 300.

The plurality of battery cells 100 may include secondary batteries, for example, cylindrical secondary batteries, pouch type secondary batteries or prismatic secondary batteries. Hereinafter, this embodiment will be described based on cylindrical secondary batteries as the plurality of battery cells 100.

The busbar assembly 200 may be provided at one side of the plurality of battery cells 100, and electrically connected to the plurality of battery cells 100. Specifically, the busbar assembly 200 may be provided at the upper side (+Z axis direction) of the plurality of battery cells 100.

The cooling unit 300 may be disposed between the plurality of battery cells 100. Specifically, the cooling unit 300 may include a plurality of cooling units 300 arranged between the plurality of battery cells 100. The plurality of cooling units 300 may securely fix the busbar assembly 200.

In this embodiment, since the cooling unit 300 is disposed between the battery cells 100, it may be possible to improve the cooling performance of the battery cells 100. Additionally, since the cooling unit 300 fixes the busbar assembly 200 disposed at one side of the battery cells 100 more stably, it may be possible to support the busbar assembly 200 connected to the battery cells 100 more stably and improve the stability of electrical connection between the busbar assembly 200 and the battery cells 100.

The cooling unit 300 may be provided in contact with two surfaces of the remaining battery cells 100 except the two outermost battery cells 100 among the plurality of battery cells 100 in the widthwise direction (+X axis direction) of the battery pack 10.

Accordingly, in this embodiment, it may be possible to remarkably increase the contact area between the cooling unit 300 and the battery cells 100, thereby maximizing the cooling performance of the battery cells 100 through the cooling unit 300.

Hereinafter, each battery cell 100 will be described in more detail with reference to the following related drawings.

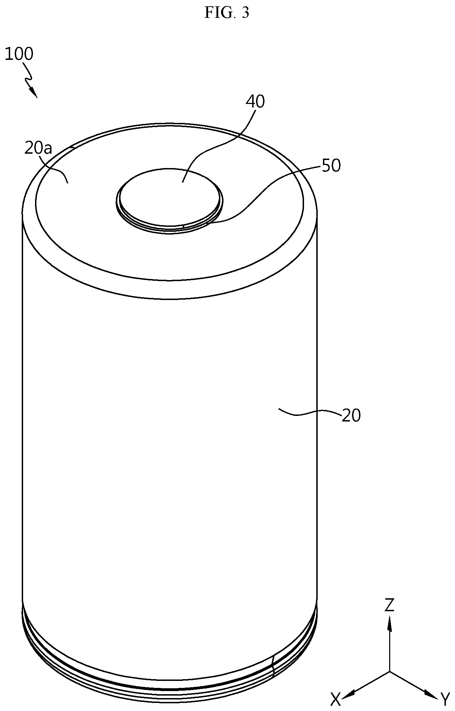

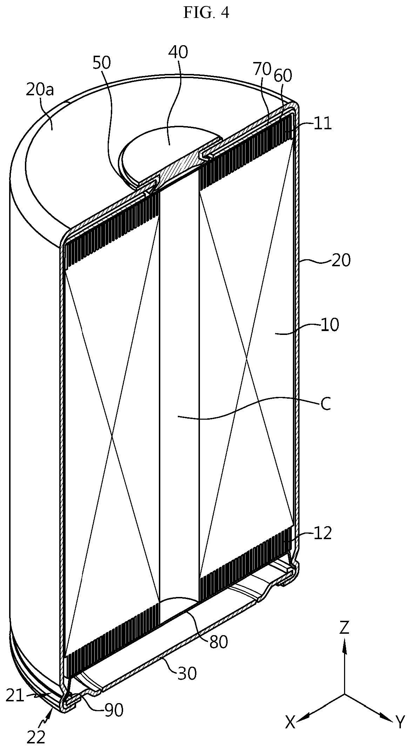

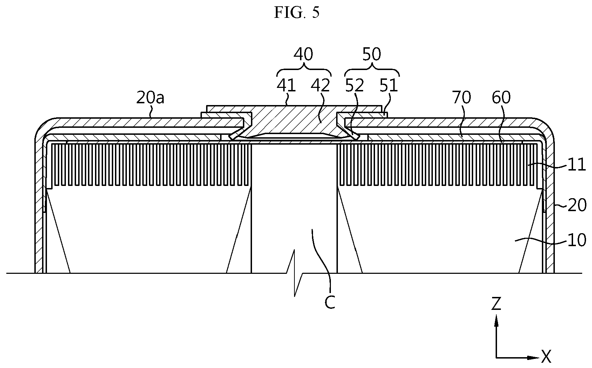

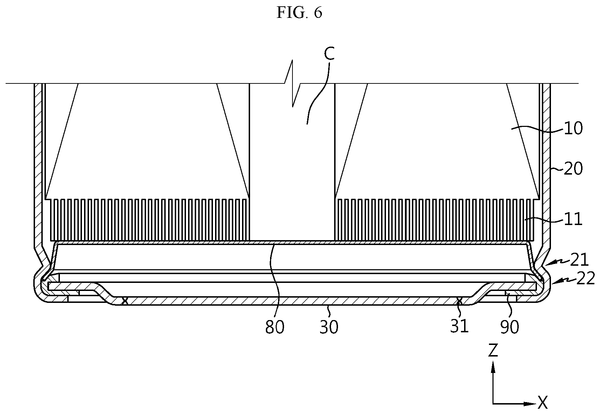

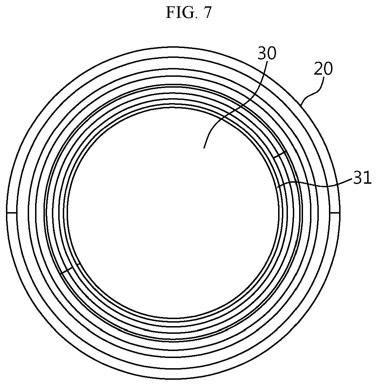

FIG. 3 is a diagram illustrating the battery cell of the battery pack of FIG. 2, FIG. 4 is a partial cross-sectional view showing the internal structure of the battery cell of FIG. 3, FIG. 5 is a partial cross-sectional view showing the upper part structure of the battery cell of FIG. 3, FIG. 6 is a partial cross-sectional view showing the lower part structure of the battery cell of FIG. 3, and FIG. 7 is a bottom view of the battery cell of FIG. 3.

Referring to FIGS. 3 to 7, the battery cell 100 includes an electrode assembly 10, a battery can 20, a cap plate 30 and a first electrode terminal 40. In addition to the above-described components, the battery cell 100 may further include an insulation gasket 50 and/or an upper current collector plate 60 and/or an insulation plate 70 and/or a lower current collector plate 80 and/or a sealing gasket 90.

The electrode assembly 10 includes a first electrode plate having a first polarity, a second electrode plate having a second polarity and a separator interposed between the first electrode plate and the second electrode plate. The first electrode plate is a positive or negative electrode plate, and the second electrode plate corresponds to an electrode plate having the opposite polarity to the first electrode plate.

The electrode assembly 10 may have, for example, a jelly-roll shape. That is, the electrode assembly 10 may be formed by winding a stack around a winding center C, the stack formed by stacking the first electrode plate, the separator and the second electrode plate at least once in that order. In this case, the separator may be disposed on the outer circumferential surface of the electrode assembly 10 for insulation from the battery can 20.

The first electrode plate includes a first electrode current collector and a first electrode active material coated on one or two surfaces of the first electrode current collector. An uncoated region, in which the first electrode active material is not coated, exists at one end of the first electrode current collector in the widthwise direction (parallel to the Z axis). The uncoated region acts as a first electrode tab. The first electrode tab 11 is disposed at the upper part of the heightwise direction (parallel to the Z axis) of the electrode assembly 10 received in the battery can 20.

The second electrode plate includes a second electrode current collector and a second electrode active material coated on one or two surfaces of the second electrode current collector. An uncoated region, in which the second electrode active material is not coated, exists at the other end of the second electrode current collector in the widthwise direction (parallel to the Z axis). The uncoated region acts as a second electrode tab 12. The second electrode tab 12 is disposed at the lower part of the heightwise direction (parallel to the Z axis) of the electrode assembly 10 received in the battery can 20.

The battery can 20 is a cylindrical container having an open portion on bottom, and is made of a metal having conductive properties. The side and the upper surface of the battery can 20 are integrally formed. The upper surface of the battery can 20 is approximately flat. The battery can 20 accommodates the electrode assembly 10 together with an electrolyte through the open portion on bottom.

The battery can 20 is electrically connected to the second electrode tab 12 of the electrode assembly 10. Accordingly, the battery can 20 has the same polarity as the second electrode tab 12.

The battery can 20 may include a beading portion 21 and a crimping portion 22 at the lower end. The beading portion 21 is disposed below the electrode assembly 10. The beading portion 21 is formed by beading the outer circumferential surface of the battery can 20. The beading portion 21 may prevent the electrode assembly 10 having a size corresponding to the width of the battery can 20 from slipping out of the open portion on bottom of the battery can 20, and may act as a support on which the cap plate 30 is seated.

The crimping portion 22 is disposed below the beading portion 21. The crimping portion 22 is extended and bent to cover the outer circumferential surface of the cap plate 30 disposed below the beading portion 21 and part of the lower surface of the cap plate 30.

The cap plate 30 is a component made of a metal having conductive properties, and covers the open portion on bottom of the battery can 20. That is, the cap plate 30 forms a lower surface of the battery cell 100. The cap plate 30 is seated on the beading portion 21 of the battery can 20 and secured by the crimping portion 22. The sealing gasket 90 may be interposed between the cap plate 30 and the crimping portion 22 of the battery can 20 to ensure the sealability of the battery can 20.

The cap plate 30 may further include a venting portion 31 to prevent the internal pressure rise caused by gas generation in the battery can 20. The venting portion 31 corresponds to an area of the cap plate 30 having a smaller thickness than the surrounding area. The venting portion 31 is structurally weaker than the surrounding area. Accordingly, when the internal pressure increases above a predetermined level due to a fault in the battery cell 100, the venting portion 31 ruptures to vent gas generated in the battery can 20.

A hole may be formed in the upper surface of the battery can 20 in advance before placing the first electrode terminal 40 and the insulation gasket 50. The formation of the hole is not limited thereto and may be performed by any other method. For example, the hole may be formed by inserting the first electrode terminal 40, or the hole may be formed in advance with a different diameter or by notching or pre-notching the upper surface to insert the first electrode terminal 40. That is, the hole may be expanded to a desired size, or the hole may be formed in a small size by notching and then expanded to the desired size. Furthermore, any other method may be used to form the hole.

The battery cell 100 according to an embodiment of the present disclosure has a structure in which both positive and negative terminals are present at the upper part, and thus the upper structure is more complicated than the lower structure. Accordingly, the cap plate 30 that forms the lower surface of the battery cell 100 may have the venting portion 31 for proper venting of gas generated in the battery can 20.

The venting portion 31 may be continuously formed in a circular pattern on the cap plate 30. The venting portion 31 is not limited thereto, and may be discontinuously formed in a circular pattern on the cap plate 30, and may be formed in a straight line pattern or any other pattern.

The first electrode terminal 40 is made of a metal having conductive properties, and is electrically connected to the first electrode tab 11 of the electrode assembly 10 through the upper surface of the battery can 20. Accordingly, the first electrode terminal 40 has the first polarity. The first electrode terminal 40 is electrically insulated from the battery can 20 having the second polarity.

The first electrode terminal 40 includes an exposed terminal portion 41 and an inserted terminal portion 42. The exposed terminal portion 41 is exposed through the battery can 20. The exposed terminal portion 41 is disposed at the center of the upper surface of the battery can 20. The inserted terminal portion 42 is electrically connected to the first electrode tab 11 through the center of the upper surface of the battery can 20. The inserted terminal portion 42 may be riveted on the inner surface of the battery can 20.

The upper surface of the battery can 20 and the first electrode terminal 40 have the opposite polarities and face the same direction. Additionally, a step may be formed between the first electrode terminal 40 and the upper surface of the battery can 20. Specifically, when the entire upper surface of the battery can 20 has a flat shape or protrudes upward from the center, the exposed terminal portion 41 of the first electrode terminal 40 may protrude upward above the upper surface of the battery can 20. On the contrary, when the upper surface of the battery can 20 has an inward curved shape in the downward direction from the center, that is to say, a direction toward the electrode assembly 10, the upper surface of the battery can 20 may protrude upward above the exposed terminal portion 41 of the first electrode terminal 40.

The insulation gasket 50 is interposed between the battery can 20 and the first electrode terminal 40 to prevent the contact between the battery can 20 and the first electrode terminal 40 having the opposite polarities. The upper surface of the battery can 20 having an approximately flat shape may act as the second electrode terminal of the battery cell 100.

The insulation gasket 50 includes an exposed portion 51 and an inserted portion 52. The exposed portion 51 is interposed between the exposed terminal portion 41 of the first electrode terminal 40 and the battery can 20. The inserted portion 52 is interposed between the inserted terminal portion 42 of the first electrode terminal 40 and the battery can 20. The insulation gasket 50 may be made of, for example, a resin having insulating properties.

When the insulation gasket 50 is made of a resin, the insulation gasket 50 may be coupled to the battery can 20 and the first electrode terminal 40, for example, by heat welding. In this instance, it may be possible to enhance sealability at the coupling interface between the insulation gasket 50 and the first electrode terminal 40 and sealability at the coupling interface between the insulation gasket 50 and the battery can 20.

The entire remaining area except the area occupied by the first electrode terminal 40 and the insulation gasket 50 in the upper surface of the battery can 20 corresponds to the second electrode terminal 20a having the opposite polarity to the first electrode terminal 40.

The battery cell 100 according to an embodiment of the present disclosure includes the first electrode terminal 40 having the first polarity and the second electrode terminal 20a having the second polarity electrically insulated from the first electrode terminal 40 together on one side in the lengthwise direction (parallel to the Z axis). That is, since the battery cell 100 according to an embodiment of the present disclosure has the pair of electrode terminals 40, 20a in the same direction, it may be possible to place an electrical connection component such as the busbar assembly 200 on only one side of the battery cells 100 when electrically connecting the plurality of battery cells 100. This may lead to the simple structure of the battery pack 1 and improved energy density.

Hereinafter, the busbar assembly 200 for electrical connection to the plurality of battery cells 100 will be described in more detail.

Referring back to FIG. 2, the busbar assembly 200 may be provided at one side of the battery cells 100, specifically, the upper side (+Z axis direction) of the battery cells 100 and electrically connected to the plurality of battery cells 100. The electrical connection of the busbar assembly 200 may be a parallel and/or series connection.

The busbar assembly 200 may be electrically connected to the first electrode terminal 40 (see FIG. 3) of the plurality of battery cells 100, having the first polarity, and the second electrode terminal 20a (see FIG. 3) of the battery can 20, having the second polarity, and may be electrically connected to an external charge/discharge line through a connector terminal 290. Here, the first polarity may be positive, and the second polarity may be negative.

Hereinafter, the components of the busbar assembly 200 will be described in more detail.

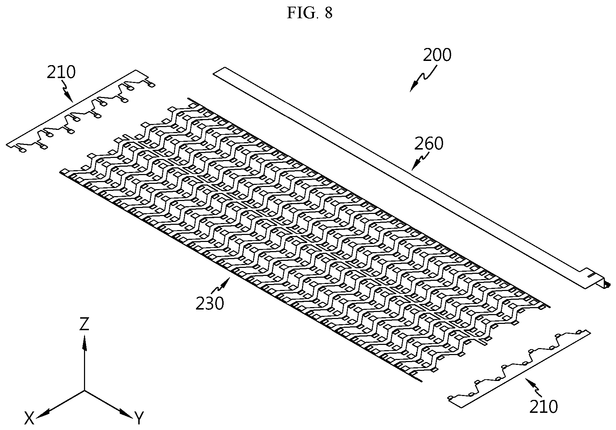

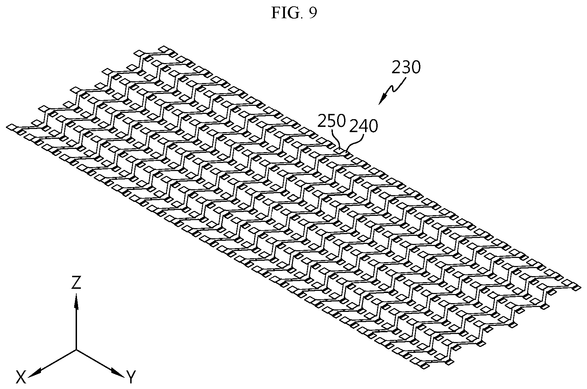

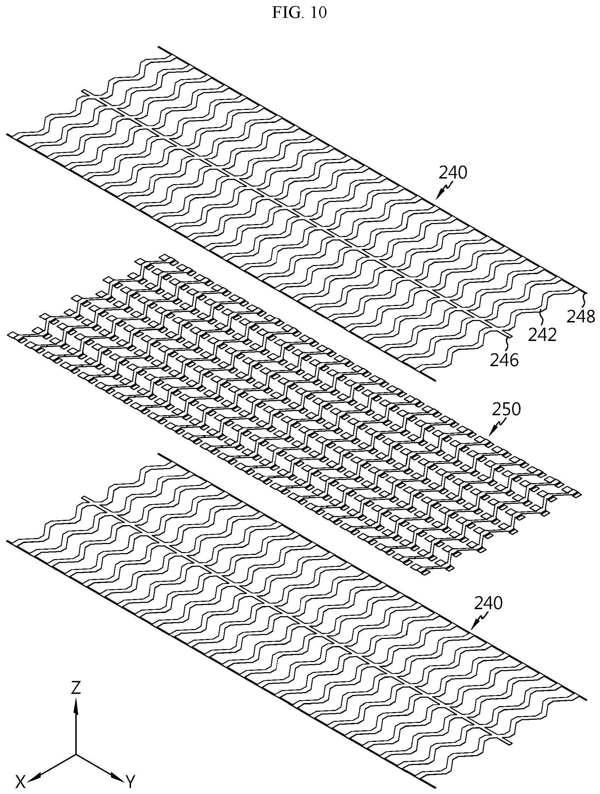

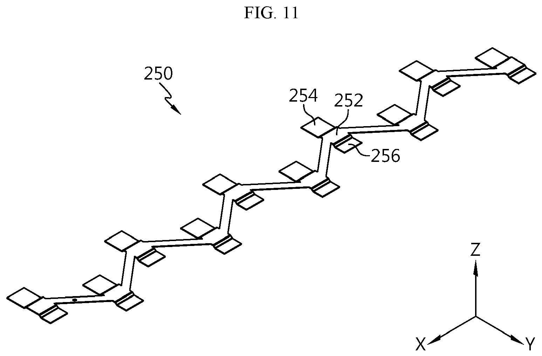

FIG. 8 is a diagram illustrating the busbar assembly of the battery pack of FIG. 2, FIG. 9 is a diagram illustrating a connection busbar unit of the busbar assembly of FIG. 8, FIG. 10 is an exploded perspective view of the connection busbar unit of FIG. 9, and FIG. 11 is a diagram illustrating a sub busbar of the connection busbar unit of FIG. 10.

Referring to FIGS. 8 to 11 and FIG. 2, the busbar assembly 200 may be connected and fixed to a cooling tube 310 of the cooling unit 300 as described below. Accordingly, the busbar assembly 200 may be disposed on the upper side (+Z axis direction) of the battery cells 100 more stably, thereby increasing the accuracy of the electrical connection.

The busbar assembly 200 may include a main busbar unit 210, the connection busbar unit 230, an interconnection board 260 and the connector terminal 290.

The main busbar unit 210 may include a plurality of main busbar units 210, and may be electrically connected to the battery cells 100 disposed at the outermost side of the battery pack 1 in the lengthwise direction (Y axis direction). The main busbar unit 210 may be electrically connected to the connector terminal 290 as described below.

The connection busbar unit 230 may be disposed between the main busbar units 210 in the lengthwise direction (Y axis direction) of the battery pack 1, and may be electrically connected to the plurality of battery cells 100 and cover the plurality of battery cells 100.

The connection busbar unit 230 may include a busbar cover 240 and a sub busbar 250.

The busbar cover 240 may cover the upper side (+Z axis direction) of the plurality of battery cells 100. The busbar cover 240 may be connected and fixed to the cooling tube 310 of the cooling unit 300 as described below for more stable placement on the upper side (+Z axis direction) of the battery cells 100.

The busbar cover 240 may comprise an insulating material. For example, the busbar cover 240 may comprise a polyimide film. The busbar cover 240 is not limited thereto and may include any other insulation member made of an insulating material.

The busbar cover 240 may include a pair of busbar covers 240 having matching shapes and sizes in the up-down direction (Z axis direction) of the battery pack 1 and coupled to each other. Here, the sub busbar 250 as described below may be a single layer, and may be inserted between the pair of busbar covers 240.

The busbar cover 240 may include a main cover 242 and a center cover 246.

The main cover 242 may cover a busbar bridge 252 of the sub busbar 250 as described below. The main cover 242 may have a shape that conforms to the shape of the busbar bridge 252 to cover the upper and lower sides of the busbar bridge 252.

The center cover 246 may be connected to the main cover 242, and formed with a predetermined length along the lengthwise direction (Y axis direction) of the battery pack 1 to support the main cover 242. The center cover 246 may be disposed at the very center of the busbar cover 240 to prevent warping or twisting of the busbar cover 240.

The busbar cover 240 may include an edge cover 248.

The edge cover 248 may include a pair of edge covers 248, and the pair of edge covers 248 may be disposed at two ends of the busbar cover 240 in the widthwise direction (X axis direction) with the center cover 246 interposed between.

The pair of edge covers 248 may be formed with a predetermined length along the lengthwise direction (Y axis direction) of the battery pack 1 to prevent warping or twisting of the busbar cover 240, together with the center cover 246.

The main cover 242 may be disposed between the pair of edge covers 248 and the center cover 246. The main cover 242 may be disposed between the pair of edge covers 248 and the center cover 246, forming a predetermined open space. The open space may guide electrical connection of a positive connection portion 254 and a negative connection portion 256 of the sub busbar 250 as described below and more smooth injection of a filler member 500 as described below.

The sub busbar 250 may be configured for electrical connection with the first electrode terminal 40 (the positive electrode) and the second electrode terminal 20a (the negative electrode) of the plurality of battery cells 100, and may be disposed on the upper side of the busbar cover 240 or inserted in between the pair of busbar covers 240. Hereinafter, this embodiment will be described based on the sub busbar 250 coupled to or inserted in between the busbar covers 240.

The sub busbar 250 may include a busbar bridge 252, the positive connection portion 254 and the negative connection portion 256.

The busbar bridge 252 may include a plurality of busbar bridges 252, may be inserted into the main cover 242 of the busbar cover 240, and may be formed with a predetermined length along the widthwise direction (X axis direction) of the battery pack 1.

The busbar bridge 252 may be made of a conductive material. For example, the busbar bridge 252 may be made of a metal such as aluminum or copper. The busbar bridge 252 is not limited thereto and may be made of any other material for the electrical connection.

The busbar bridge 252 may have a shape corresponding to the arrangement structure of the battery cells 100 in the widthwise direction (X axis direction) of the battery pack 1 to increase the electrical connection efficiency with the battery cells 100. Accordingly, in this embodiment, the busbar bridge 252 may have a zigzag shape in the widthwise direction (X axis direction) of the battery pack 1.

The positive connection portion 254 may be integrally extended from the busbar bridge 252 and protruded out of the busbar cover 240. The positive connection portion 254 may be electrically connected to the first electrode terminal 40 (see FIG. 3) which is the positive electrode of the battery cell 100. The electrical connection may be made through a welding process for electrical connection, such as laser welding or ultrasonic welding.

Since the connection between the positive connection portion 254 and the positive electrode 40 (the first electrode terminal) of the battery cell 100 is made in the open space outside of the busbar cover 240, the welding process for the connection may be performed in the open space directly without any additional process when making the connection.

The negative connection portion 256 may be integrally extended from the busbar bridge 252 and protruded in the opposite direction to the positive connection portion 254, and may be protruded out of the busbar cover 240.

The negative connection portion 256 may be electrically connected to the second electrode terminal 20a (see FIG. 3) which is the negative electrode of the battery cell 100. The electrical connection may be made through a welding process for the electrical connection, such as laser welding or ultrasonic welding.

Since the connection between the negative connection portion 256 and the negative electrode 20a (the second electrode terminal) of the battery cell 100 is made in the open space outside of the busbar cover 240, the welding process for the connection may be performed in the open space directly without any additional process when making the connection.

The interconnection board 260 may be connected to an external sensing line, and may be disposed at one end of the battery pack 1. The location of the interconnection board 260 may change according to the design, and the interconnection board 260 may be disposed at any other location for connection to the external sensing line. Furthermore, the interconnection board 260 may include a plurality of interconnection boards 260 according to the number of battery cells 100 or capacity of the battery pack 1.

The interconnection board 260 may be exposed through the battery pack 1 for the connection to the external sensing line. The external sensing line may connect the interconnection board 260 to a battery management system (not shown). The battery management system may determine the state of charge (SOC) of the battery cells connected in parallel based on the voltage of the battery cells.

The interconnection board 260 may include a thermistor to determine the temperature condition of the battery cells 100. The thermistor may be embedded in the interconnection board 260 or mounted outside of the interconnection board 260.

The connector terminal 290 may be provided as a pair. The connector terminal 290 is for connection with an external charge/discharge line and may be provided as a high voltage connector terminal.

Hereinafter, the cooling unit 300 according to this embodiment will be described in more detail.

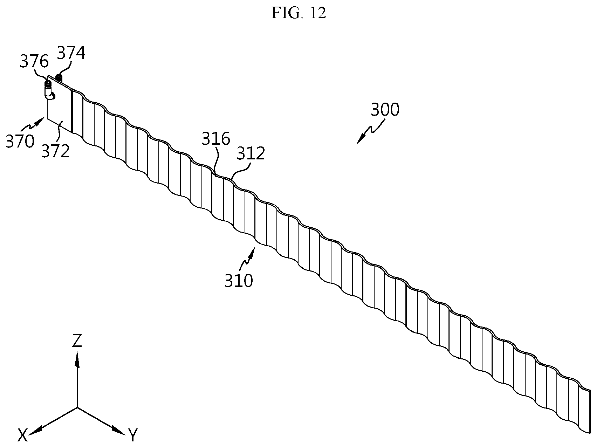

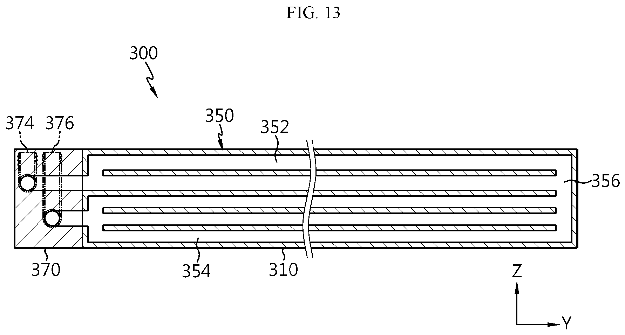

FIG. 12 is a diagram illustrating the cooling unit of the battery pack of FIG. 2, and FIG. 13 is a cross-sectional view of the cooling unit of FIG. 12.

Referring to FIGS. 12 and 13 and FIG. 2, the cooling unit 300 may include a plurality of cooling units 300.

Each of the plurality of cooling units 300 may include a cooling tube 310, a cooling channel 350 and a cooling fluid inlet/outlet 370.

The cooling tube 310 may be formed with a predetermined size along the lengthwise direction (Y axis direction) of the battery pack 1, and may be disposed between the plurality of battery cells 100 and include the cooling channel 350 in which a cooling fluid as described below circulates. In this embodiment, the cooling fluid may be water, and in addition to the water, may include at least one fluid that may exchange heat with the surrounding environment.

The cooling tube 310 may be formed in a shape corresponding to the outer surface of the plurality of battery cells 100 facing each other in the widthwise direction (X axis direction) of the battery pack 1.

The cooling tube 310 may have a plurality of convex portions 312 and a plurality of concave portions 316 in an alternating manner along the lengthwise direction (Y axis direction) of the battery pack 1, the convex portions 312 and the concave portions 316 having convex and concave shapes in the widthwise direction (X axis direction) of the battery pack 1, respectively.

The cooling tube 310 may be positioned in contact with the outer surface of the plurality of battery cells 100 to further increase the cooling performance of the battery cells 100. The cooling tube 310 may be adhered and secured to the plurality of battery cells 100 through the filler member 500 as described below or an adhesive member.

The cooling channel 350 may allow the cooling fluid for cooling the battery cells 100 to circulate. The cooling channel 350 may be disposed in the cooling tube 310 and connected in communication with the cooling fluid inlet/outlet 370 as described below.

The cooling channel 350 may include an upper channel 352, a lower channel 354 and a connection channel 356.

The upper channel 352 may be disposed at the upper part of the cooling tube 310 near the busbar assembly 200, and may be formed with a predetermined length along the lengthwise direction (X axis direction) of the cooling tube 310. The upper channel 352 may be connected in communication with a cooling fluid feed port 374 of the cooling fluid inlet/outlet 370.

The upper channel 352 may include at least one upper channel 352. Hereinafter, this embodiment is described based on a plurality of upper channels 352 to ensure the cooling performance.

The lower channel 354 may be disposed at the lower part (-Z axis direction) of the cooling tube 310 spaced apart from the at least one upper channel 352, and may be formed with a predetermined length along the lengthwise direction (X axis direction) of the cooling tube 310. The lower channel 354 may be connected in communication with a cooling fluid exit port 376 of the cooling fluid inlet/outlet 370.

The lower channel 354 may include at least one lower channel 354. Hereinafter, this embodiment is described based on a plurality of lower channels 354 to ensure the cooling performance.

The connection channel 356 may connect the at least one upper channel, in this embodiment, the plurality of upper channels 352 to the at least one lower channel, in this embodiment, the plurality of lower channels 354.

The connection channel 356 may be disposed at the other end (+Y axis direction) of the cooling tube 310 opposite the cooling fluid inlet/outlet 370 to maximize the cooling channel 350.

In this embodiment, during the circulation of the cooling fluid in the cooling channel 350, the cooling fluid fed from the cooling fluid feed port 374 may be fed to the upper channel 352 close to the busbar assembly 200 and flow to the cooling fluid exit port 376 through the connection channel 356 and the lower channel 354.

Accordingly, in this embodiment, since the cold cooling fluid is first fed to an area close to the busbar assembly 200 having a higher temperature distribution in the battery pack 1, it may be possible to remarkably improve the cooling performance of the battery cells.

The cooling fluid inlet/outlet 370 may be connected to the cooling tube 310 such that it is in communication with the cooling channel 350 of the cooling tube 310. The cooling fluid inlet/outlet 370 may be exposed to the external environment and connected in communication with an external cooling line.

The cooling fluid inlet/outlet 370 may be disposed on one side (-Y axis direction) in the lengthwise direction (Y axis direction) of the battery pack 1. The cooling tube 310 connected to the cooling fluid inlet/outlet 370 may be formed with a predetermined length from the cooling fluid inlet/outlet 370 toward the other side (+Y axis direction) of the battery pack 1 in the lengthwise direction (Y axis direction) of the battery pack 1.

The cooling fluid inlet/outlet 370 may include an inlet/outlet body 372, the cooling fluid feed port 374 and the cooling fluid exit port 376.

The inlet/outlet body 372 may be connected to one end (-Y axis direction) of the cooling tube 310.

The cooling fluid feed port 374 may be disposed in the inlet/outlet body 372 and connected in communication with the upper channel 352. Here, the cooling fluid feed port 374 may be coupled to the inlet/outlet body 372 by cauking. The cooling fluid feed port 374 may be connected in communication with the external cooling line.

The cooling fluid exit port 376 may be disposed in the inlet/outlet body 372 and connected in communication with the lower channel 354. Here, the cooling fluid exit port 376 may be coupled to the inlet/outlet body 372 by cauking. The cooling fluid exit port 376 may be spaced a predetermined distance apart from the cooling fluid feed port 374 and connected in communication with the external cooling line.

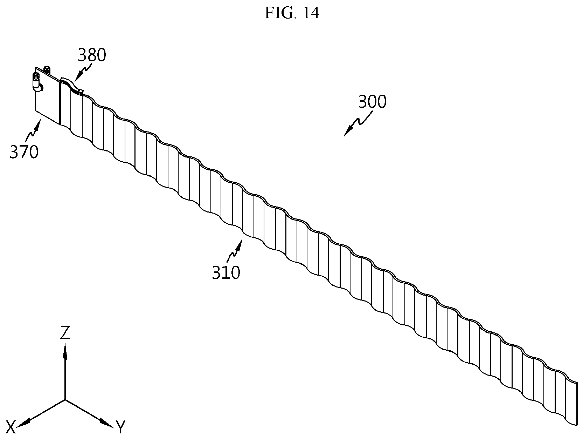

FIGS. 14 to 17 are diagrams illustrating fixing holders of the cooling unit of FIG. 12.

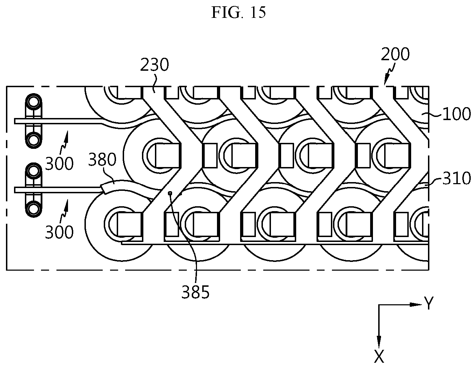

Referring to FIGS. 14 and 15, the cooling unit 300 may include the fixing holders 380.

The fixing holder 380 may be configured to fix and support the busbar assembly 200, and may be provided in the cooling tube 310 and connected to the busbar assembly 200.

The fixing holder 380 may be provided in at least one or a plurality of more. The fixing holder 380 may be provided in at least one cooling tube 310 of the plurality of cooling units 300 or in the plurality of cooling tubes 310.

The fixing holder 380 may include a first fixing holder 380.

The first fixing holder 380 may be provided in at least one or a plurality of more. The first fixing holder 380 may be formed with a length in a range between the side length of one battery cell 100 and the side length of two battery cells 100 in the lengthwise direction (Y axis direction) of the cooling tube 310.

It may be possible to minimize the volume occupied by the first fixing holder 380, fix the busbar assembly 200 and reduce the manufacturing cost, thereby ensuring price competitiveness.

The first fixing holder 380 may be disposed on the upper side of the cooling tube 310, and inserted into the busbar assembly 200. Specifically, the first fixing holder 380 may be disposed close to the cooling fluid inlet/outlet 370 of the cooling tube 310, and inserted into the connection busbar unit 230 of the busbar assembly 200. To this end, the first fixing holder 380 may have an insertion protrusion 285 that is inserted into the connection busbar unit 230.

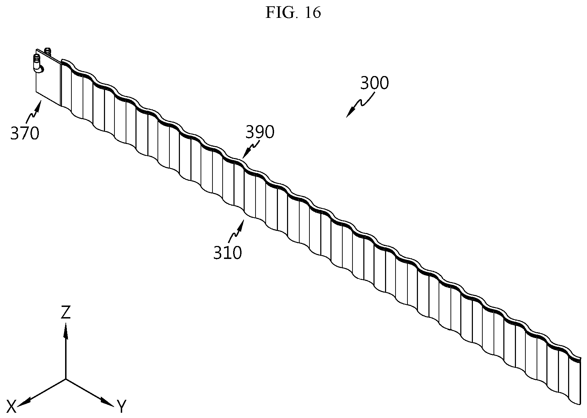

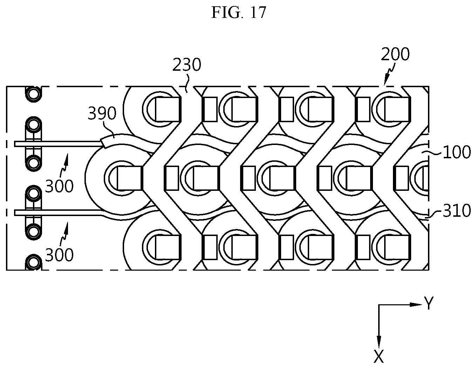

Referring to FIGS. 16 and 17, the cooling unit 300 may include a fixing holder 390.

The fixing holder 390 may be provided together with the first fixing holder 380 or may be provided instead of the first fixing holder 380.

The fixing holder 390 may include a second fixing holder 390.

The second fixing holder 390 may be provided in at least one or a plurality of more. The second fixing holder 390 may be formed with a predetermined length along the lengthwise direction (Y axis direction) of the cooling tube 310, and disposed below the busbar assembly 200. Specifically, the second fixing holder 390 may have a length corresponding to the length of the cooling tube 310 of the second fixing holder 390, and support the bottom of the busbar assembly 200 on the upper side of the cooling tube 310.

Since the second fixing holder 390 has the predetermined length corresponding to the cooling tube 310, the second fixing holder 390 may support the bottom of the busbar assembly 200, specifically, the bottom of the connection busbar unit 230 more stably on the upper side of the cooling tube 310.

As described above, in this embodiment, it may be possible to fix and support more stably the connection busbar unit 230 of the busbar assembly 200 disposed on the cooling unit 300 through the fixing holder structure including either the first fixing holder 380 or the second fixing holder 390, or both.

Referring back to FIG. 2, the battery pack 1 may include a side structure unit 400.

The side structure unit 400 may include a pair of side structure units 400.

The pair of the side structure unit 400 may cover two sides of the battery cells 100 in the widthwise direction (X axis direction).

The pair of side structure units 400 may comprise a plastic resin, and may support the battery cells 100 and ensure the strength of the battery cells 100 as well as forming the side shape of the battery pack 1 in the widthwise direction (X axis direction). Additionally, each of the pair of side structure units 400 may accommodate the connector terminal 290.

The battery pack 1 may include the filler member 500.

The filler member 500 may be filled in a space between the cooling unit 300 and the plurality of battery cells 100 in the heightwise direction (Z axis direction) of the battery pack 1. In FIG. 2, the filler member 500 is indicated by a hexahedron prism shaped dashed line for convenience of understanding, and the filler member 500 may be fully filled in the space between the cooling unit 300 and the plurality of battery cells 100.

The filler member 500 may cover the upper and lower sides of the battery pack 1 (see FIG. 2) to form a pack case structure of the battery pack 1 together with the side structure unit 400.

Additionally, the filler member 500 may not only fix the plurality of battery cells 100 more stably but also increase the thermal dissipation efficiency of the plurality of battery cells 100, thereby improving the cooling performance of the battery cells 100.

The filler member 500 may comprise a potting resin. The potting resin may be formed by injecting a thin resin material into the plurality of battery cells 100 and curing it. Here, the injection of the resin material may be performed at room temperature of about 15°C to 25°C to prevent thermal damage of the plurality of battery cells 100.

Specifically, the filler member 500 may comprise a silicone resin. The filler member 500 is not limited thereto, and may comprise any other resin material capable of securing the battery cells 100 and improving the thermal dissipation efficiency.

More specifically, the filler member 500 may cover the non-contact area between the battery cells 100 and the cooling tube 310, and thereby guide the heat balance of the battery cells 100, and thus it may be possible to prevent the cooling imbalance of the battery cells 100 and prevent the local degradation of the battery cells 100. Additionally, it may be possible to remarkably improve the safety of the battery cells 100 through the local degradation prevention of the battery cells 100.

Additionally, the filler member 500 may act as an insulator to obstruct the flow of current to the adjacent battery cells 100 when damage occurs due to an abnormal situation in at least one specific battery cell 100 among the plurality of battery cells 100.

Additionally, the filler member 500 may include a material having high specific heat performance. Accordingly, the filler member 500 may increase the thermal mass, and thus it may be possible to delay a temperature rise of the battery cells 100 during fast charge/discharge of the battery cells 100, thereby preventing a rapid temperature rise of the battery cells 100.

Additionally, the filler member 500 may include glass bubble. The glass bubble may reduce the specific weight of the filler member 500, and thus increase the energy density compared to the weight.

Additionally, the filler member 500 may include a material having high heat resistance performance. Accordingly, the filler member 500 may effectively prevent thermal runaway to the adjacent battery cells when a thermal event occurs due to overheat in at least one specific battery cell 100 among the plurality of battery cells 100.

Additionally, the filler member 500 may comprise a material having high flame retardant performance. Accordingly, the filler member 500 may minimize fire risks when a thermal event occurs due to overheat in at least one specific battery cell 100 among the plurality of battery cells 100.

In addition to the battery cells 100, the filler member 500 may be filled in the busbar assembly 200. Specifically, the filler member 500 may be filled in the busbar assembly 200 to cover the upper side of the busbar assembly 200.

Here, the filler member 500 may be continuously filled in between the busbar assembly 200 and the battery cells 100 without a break or gap between the busbar assembly 200 and the battery cells 100 in the up-down direction (Z axis direction) of the battery cells 100.

Since the filler member 500 according to this embodiment is continuously filled in the battery cells 100 and the busbar assembly 200 without discontinuity, it is possible to achieve uniform heat distribution in the area between the battery cells 100 and the busbar assembly 200 without imbalance in heat distribution, thereby remarkably improving the cooling performance of the battery pack 1.

Furthermore, the filler member 500 may be filled to cover the area except the outer lateral side of the side structure unit 400. Here, the filler member 500 may be continuously filled in the battery cells 100, the busbar assembly 200 and the cooling unit 300 without discontinuity. Accordingly, it may be possible to further improve the cooling performance of the battery pack 1.

Hereinafter, the pack case structure formation through the injection of the filler member 500 will be described in more detail.

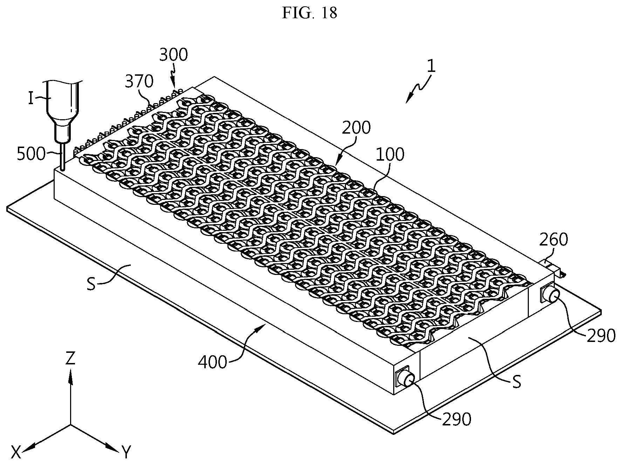

FIG. 18 is a diagram illustrating the filler member injection of the battery pack of FIG. 1.

Referring to FIG. 18, a manufacturer may form the pack case structure of the upper and lower parts of the battery pack 1 (see FIG. 2) through the filler member 500 comprising the resin material by injecting and coating the filler member 500 comprising the silicone resin through a resin injection device I. Specifically, the filler member 500 may be filled until it covers the upper side of the busbar assembly 200 on the upper side (+Z axis direction) of the battery pack 1 and the bottom of the battery cells 100 on the lower side (-Z axis direction) of the battery pack 1.

In the process of injecting and coating the filler member 500 through the resin injection device I, an injection guider S may be disposed on the bottom of the side structure unit 400 and at least one surface between the side structure units 400 to prevent downward (-Z axis direction) and lateral (Y axis direction) leakage of the resin during the injection of the filler member 500. The injection guider S may be made of Teflon to enable easy detachment after the filler member 500 is cured.

In the process of injecting and coating the filler member 500, the side structure unit 400 may act as a mold to support the battery cells 100 and the cooling unit 300 together with the injection guider S and prevent resin leaks.

Furthermore, the fixing holders 380, 390 of the cooling unit 300 may support the busbar assembly 200 and guide the placement of the connection busbar unit 230 of the busbar assembly 200 in position, thereby effectively preventing misposition or misalignment of the connection busbar unit 230 that may occur during the injection of the filler member 500.

Accordingly, in this embodiment, since the pack case structure of the battery pack 1 (see FIG. 1) is formed through the side structure unit 400 and the filler member 500, compared to the conventional pack case structure formed as a complex assembly of plates, it may be possible to simplify the assembly process of the battery pack 1 and significantly reduce the manufacturing cost, thereby improving the price competitiveness.

Furthermore, in this embodiment, since the pack case structure is formed by the side structure unit 400 and the filler member 500, compared to the conventional pack case structure having a cell frame structure including an assembly of plates, it may be possible to reduce the total size of the battery pack 1, thereby significantly increasing the energy density.

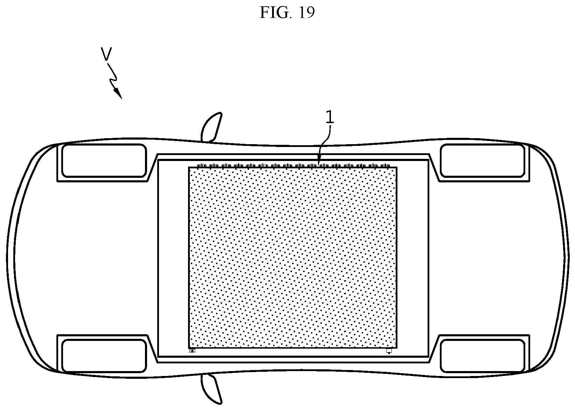

FIG. 19 is a diagram illustrating a vehicle according to an embodiment of the present disclosure.

Referring to FIG. 19, the vehicle V may be an electric vehicle or a hybrid electric vehicle, and may include at least one battery pack 1 of the previous embodiment as an energy source.

In this embodiment, since the above-described battery pack 1 has a compact structure with improved cooling performance and high energy density, it may be possible to provide high cooling performance and facilitate a modularization structure of the plurality of battery packs 1 when mounted in the vehicle 1, and to ensure a relatively high degree of freedom in mounting in various interior space shapes of the vehicle V. That is, in this embodiment, the at least one battery pack 1 may be provided as the battery pack case structure that has high cooling performance, is easy to form a modularization structure and has a high degree of freedom of mounting.

Additionally, the lengthwise direction of the at least one battery pack 1 may be perpendicular to the lengthwise direction of the vehicle so that the pair of side structure units 400 may protect the plurality of battery cells 100 in the event of a front-end or rear-end collision of the vehicle.

According to the various embodiments as described above, it may be possible to provide the battery pack 1 with improved cooling performance and the vehicle V comprising the same.

Additionally, according to the various embodiments as described above, it may be possible to provide the battery pack 1 with increased energy density and manufacturing efficiency and the vehicle V comprising the same.

## Claims

1. A battery pack (1), comprising:
a plurality of battery cells (100);
a busbar assembly (200) disposed on one side of the plurality of battery cells, and electrically connected to the plurality of battery cells; and
a cooling unit (300) disposed between the plurality of battery cells, and secured to the busbar assembly,
wherein the cooling unit includes:
a cooling tube (310) formed with a predetermined length along a lengthwise direction of the battery pack, and disposed between the plurality of battery cells;
a cooling channel (350) provided in the cooling tube and configured to circulate a cooling fluid for cooling the battery cells; and
a cooling fluid inlet/outlet (370) connected to the cooling tube such that the cooling fluid inlet/outlet is in communication with the cooling channel, and
wherein the busbar assembly is connected and fixed to the cooling tube,
**characterized in that** the cooling unit includes a fixing holder (380, 390) provided on the cooling tube and connected to the busbar assembly.

2. The battery pack according to claim 1, wherein the cooling unit is provided in contact with two surfaces of the remaining battery cells except the two outermost battery cells among the plurality of battery cells, in a widthwise direction of the battery pack.

3. The battery pack according to claim 1, wherein the fixing holder is provided on an upper side of the cooling tube and inserted into the busbar assembly.

4. The battery pack according to claim 1, wherein the fixing holder is formed with a predetermined length along a lengthwise direction of the cooling tube, and disposed below the busbar assembly.

5. The battery pack according to claim 1, wherein the busbar assembly includes:
a busbar cover (240) to cover an upper side of the plurality of battery cells; and
a sub busbar (250) of a single layer inserted into the busbar cover and configured for electrical connection with positive and negative electrodes of the plurality of battery cells, and
wherein the busbar cover is connected and fixed to the cooling tube.

6. The battery pack according to claim 5, wherein the sub busbar includes:
a busbar bridge (252) inserted into the busbar cover and formed with a predetermined length along a widthwise direction of the battery pack;
a positive connection portion (254) integrally extended and protruded from the busbar bridge; and
a negative connection portion (256) integrally extended from the busbar bridge and protruded in an opposite direction to the positive connection portion.

7. The battery pack according to claim 6, wherein the busbar cover includes:
a main cover (242) to cover the busbar bridge; and
a center cover (246) connected to the main cover, and formed with a predetermined length along the lengthwise direction of the battery pack to support the main cover.

8. The battery pack according to claim 5, wherein the busbar cover comprises an insulating material.

9. The battery pack according to claim 8, wherein the busbar cover comprises a polyimide film.

10. The battery pack according to claim 1, comprising;
a filler member (500) filled in a space between the cooling unit and the plurality of battery cells.

11. The battery pack according to claim 10, wherein the filler member comprises a potting resin.

12. The battery pack according to claim 11, wherein the filler member comprises a silicone resin.

13. A vehicle, comprising:
at least one battery pack according to claim 1.

## Patentansprüche

1. Batteriepack (1), umfassend:
eine Mehrzahl von Batteriezellen (100);
eine Sammelschienenanordnung (200), welche an einer Seite der Mehrzahl von Batteriezellen angeordnet ist und elektrisch mit der Mehrzahl von Batteriezellen verbunden ist; und
eine Kühleinheit (300), welche zwischen der Mehrzahl von Batteriezellen angeordnet ist und an der Sammelschienenanordnung gesichert ist,
wobei die Kühleinheit umfasst:
ein Kühlrohr (310), welche mit einer vorbestimmten Länge entlang einer Längsrichtung des Batteriepacks ausgebildet ist und zwischen der Mehrzahl von Batteriezellen angeordnet ist;
einen Kühlkanal (350), welcher in dem Kühlrohr bereitgestellt ist und dazu eingerichtet ist, ein Kühlfluid zum Kühlen der Batteriezellen zu zirkulieren; und
einen Kühlfluid-Einlass/Auslass (370), welcher mit dem Kühlrohr verbunden ist, so dass der Kühlfluid-Einlass/Auslass in Kommunikation mit dem Kühlkanal steht, und
wobei die Sammelschienenanordnung mit dem Kühlrohr verbunden und daran befestigt ist,
**dadurch gekennzeichnet, dass** die Kühleinheit einen Befestigungshalter (380, 390) umfasst, welcher an dem Kühlrohr bereitgestellt ist und mit der Sammelschienenanordnung verbunden ist.

2. Batteriepack nach Anspruch 1, wobei die Kühleinheit in Kontakt mit zwei Flächen der verbleibenden Batteriezellen, mit Ausnahme der beiden äußersten Batteriezellen unter der Mehrzahl von Batteriezellen, in einer Breitenrichtung des Batteriepacks bereitgestellt ist.

3. Batteriepack nach Anspruch 1, wobei der Befestigungshalter an einer oberen Seite des Kühlrohrs bereitgestellt ist und in die Sammelschienenanordnung eingeführt ist.

4. Batteriepack nach Anspruch 1, wobei der Befestigungshalter mit einer vorbestimmten Länge entlang einer Längsrichtung des Kühlrohrs ausgebildet ist und unter der Sammelschienenanordnung angeordnet ist.

5. Batteriepack nach Anspruch 1, wobei die Sammelschienenanordnung umfasst:
eine Sammelschienenabdeckung (240), um eine obere Seite der Mehrzahl von Batteriezellen abzudecken; und
eine Untersammelschiene (250) einer einzelnen Lage, welche in die Sammelschienenabdeckung eingeführt ist und für eine elektrische Verbindung mit positiven und negativen Elektroden der Mehrzahl von Batteriezellen eingerichtet ist, und
wobei die Sammelschienenabdeckung mit dem Kühlrohr verbunden und daran befestigt ist.

6. Batteriepack nach Anspruch 5, wobei die Untersammelschiene umfasst:
eine Sammelschienenbrücke (252), welche in die Sammelschienenabdeckung eingeführt ist und mit einer vorbestimmten Länge entlang einer Breitenrichtung des Batteriepacks ausgebildet ist;
einen positiven Verbindungsabschnitt (254), welcher sich integral von der Sammelschienenbrücke erstreckt und davon vorsteht; und
einen negativen Verbindungsabschnitt (256), welcher sich integral von der Sammelschienenbrücke in einer entgegengesetzten Richtung zu dem positiven Verbindungsabschnitt erstreckt und davon vorsteht.

7. Batteriepack nach Anspruch 6, wobei die Sammelschienenabdeckung umfasst:
eine Hauptabdeckung (242), um die Sammelschienenbrücke abzudecken; und
eine mittlere Abdeckung (246), welche mit der Hauptabdeckung verbunden ist und mit einer vorbestimmten Länge entlang der Längsrichtung des Batteriepacks ausgebildet ist, um die Hauptabdeckung zu haltern.

8. Batteriepack nach Anspruch 5, wobei die Sammelschienenabdeckung ein isolierendes Material umfasst.

9. Batteriepack nach Anspruch 8, wobei die Sammelschienenabdeckung einen Polyimid-Film umfasst.

10. Batteriepack nach Anspruch 1, umfassend:
ein Füllelement (500), welches in einen Raum zwischen der Kühleinheit und der Mehrzahl von Batteriezellen gefüllt ist.

11. Batteriepack nach Anspruch 10, wobei das Füllelement ein Vergussharz umfasst.

12. Batteriepack nach Anspruch 11, wobei das Füllelement ein Silikonharz umfasst.

13. Fahrzeug, umfassend:
wenigstens einen Batteriepack nach Anspruch 1.

## Revendications

1. Bloc-batterie (1), comprenant :
une pluralité de cellules de batterie (100) ;
un ensemble barres omnibus (200) situé sur un côté de la pluralité de cellules de batterie et connecté électriquement à la pluralité de cellules de batterie ; et
une unité de refroidissement (300) disposée entre la pluralité de cellules de batterie et fixée à l'ensemble barre omnibus,
dans lequel l'unité de refroidissement comporte :
un tube de refroidissement (310) formé avec une longueur prédéterminée le long d'une direction longitudinale du bloc-batterie, et situé entre la pluralité de cellules de batterie ; un canal de refroidissement (350) ménagé dans le tube de refroidissement et configuré pour faire circuler un fluide de refroidissement afin de refroidir les cellules de batterie ; et
une entrée/sortie de fluide de refroidissement (370) connectée au tube de refroidissement de sorte que l'entrée/sortie de fluide de refroidissement soit en communication avec le canal de refroidissement, et
dans lequel l'ensemble barre omnibus est connecté et fixé au tube de refroidissement, **caractérisé en ce que** l'unité de refroidissement comporte un support de fixation (380, 390) prévu sur le tube de refroidissement et connecté à l'ensemble barre omnibus.

2. Bloc-batterie selon la revendication 1, dans lequel l'unité de refroidissement est mise en contact avec deux surfaces des cellules de batterie restantes, à l'exception des deux cellules de batterie les plus extérieures parmi la pluralité de cellules de batterie, dans une direction de largeur du bloc-batterie.

3. Bloc-batterie selon la revendication 1, dans lequel le support de fixation est prévu sur un côté supérieur du tube de refroidissement et inséré dans l'ensemble barre omnibus.

4. Bloc-batterie selon la revendication 1, dans lequel le support de fixation est formé avec une longueur prédéterminée le long d'une direction longitudinale du tube de refroidissement, et disposé sous l'ensemble barre omnibus.

5. Bloc-batterie selon la revendication 1, dans lequel l'ensemble barre omnibus comporte :
un couvercle de barre omnibus (240) destiné à recouvrir un côté supérieur de la pluralité de cellules de batterie ; et
une sous-barre omnibus (250) d'une seule couche insérée dans le couvercle de barre omnibus et configurée pour une connexion électrique avec des électrodes positives et négatives de la pluralité de cellules de batterie, et
dans lequel le couvercle de barre omnibus est connecté et fixé au tube de refroidissement.

6. Bloc-batterie selon la revendication 5, dans lequel la sous-barre omnibus comporte :
un pont de barre omnibus (252) inséré dans le couvercle de barre omnibus et formé avec une longueur prédéterminée le long d'une direction de largeur du bloc-batterie ;
une partie de connexion positive (254) s'étendant d'un seul tenant et faisant saillie à partir du pont de barre omnibus ; et
une partie de connexion négative (256) s'étendant d'un seul tenant à partir du pont de barre omnibus et faisant saillie dans une direction opposée à la partie de connexion positive.

7. Bloc-batterie selon la revendication 6, dans lequel le couvercle de barre omnibus comporte :
un couvercle principal (242) destiné à recouvrir le pont de barre omnibus ; et
un couvercle central (246) connecté au couvercle principal, et formé avec une longueur prédéterminée le long de la direction longitudinale du bloc-batterie pour supporter le couvercle principal.

8. Bloc-batterie selon la revendication 5, dans lequel le couvercle de barre omnibus comprend un matériau isolant.

9. Bloc-batterie selon la revendication 8, dans lequel le couvercle de barre omnibus comprend un film polyimide.

10. Bloc-batterie selon la revendication 1, comprenant ;
un élément de remplissage (500) remplissant un espace entre l'unité de refroidissement et la pluralité de cellules de batterie.

11. Bloc-batterie selon la revendication 10, dans lequel l'élément de remplissage comprend une résine d'enrobage.

12. Bloc-batterie selon la revendication 11, dans lequel l'élément de remplissage comprend une résine de silicone.

13. Véhicule, comprenant :
au moins un bloc-batterie selon la revendication 1.
